(19) Europäisches Patentamt
European Patent Office
Office européen des brevets

(11) EP 1 758 370 A2

(12) **EUROPEAN PATENT APPLICATION**

(43) Date of publication:
28.02.2007 Bulletin 2007/09

(51) Int Cl.:
H04N 5/20 *(2006.01)*    G06T 5/40 *(2006.01)*

(21) Application number: 06017367.1

(22) Date of filing: 21.08.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 23.08.2005 JP 2005241772

(71) Applicant: SONY CORPORATION
Tokyo (JP)

(72) Inventor: Harada, Shigeru
Shinagawa-ku
Tokyo (JP)

(74) Representative: Müller - Hoffmann & Partner
Patentanwälte,
Innere Wiener Strasse 17
81667 München (DE)

(54) **Image processing apparatus, image display and image processing method**

(57)    There is provided an image processing apparatus, an image display and an image processing method which are capable of preventing an unnatural change in image quality due to image processing. A luminance distribution detecting circuit detects a luminance distribution as the histogram distribution of YUV signals. A gain limiter levels out by limiting the frequency of the luminance histogram to a frequency threshold or less so as to reduce the concentration of the distribution on a specific luminance level segment. Then, a γ correction circuit in the image processing section performs image processing (contrast control) on the YUV signals through the use of the luminance distribution leveled out.

FIG. 1

EP 1 758 370 A2

**Description**

CROSS REFERENCES TO RELATED APPLICATIONS

The present invention contains subject matter related to Japanese Patent Application JP 2005-241772 filed in the Japanese Patent Office on August 23, 2005, the entire contents of which being incorporated herein by reference.

BACKGROUND OF THE INVENTION

1. Field of the Invention

The present invention relates to an image processing apparatus having a function of performing an image quality correction process on an image signal, an image display and an image processing method.

2. Description of the Related Art

Typically, apparatuses such as television receivers, VTRs (Video Tape Recorders), digital cameras, television cameras or printers have an image processing function which makes an image quality correction to an input image (for example, functions such as brightness or contrast control, and contour correction). Such a function is effectively applied mainly to a totally dark and low-contrast image or a blurred image.
Among these functions, in general, the contrast control is performed by correcting a gamma curve which represents so-called gamma characteristics. The amount of correction which is set at each luminance (signal) level at the time of correcting the gamma curve is called gain.
For example, in Japanese Unexamined Patent Application Publication Nos. 2002-366121, 2004-40808 and 2004-282377, there are disclosed image processing techniques in which the luminance distribution of an input image is detected as a histogram distribution, and then image processing such as contrast control is performed on the input image on the basis of the histogram distribution. In these techniques, when specifically the gain is set to be large at a luminance level segment with a high frequency value, the overall contrast can be effectively improved.

SUMMARY OF THE INVENTION

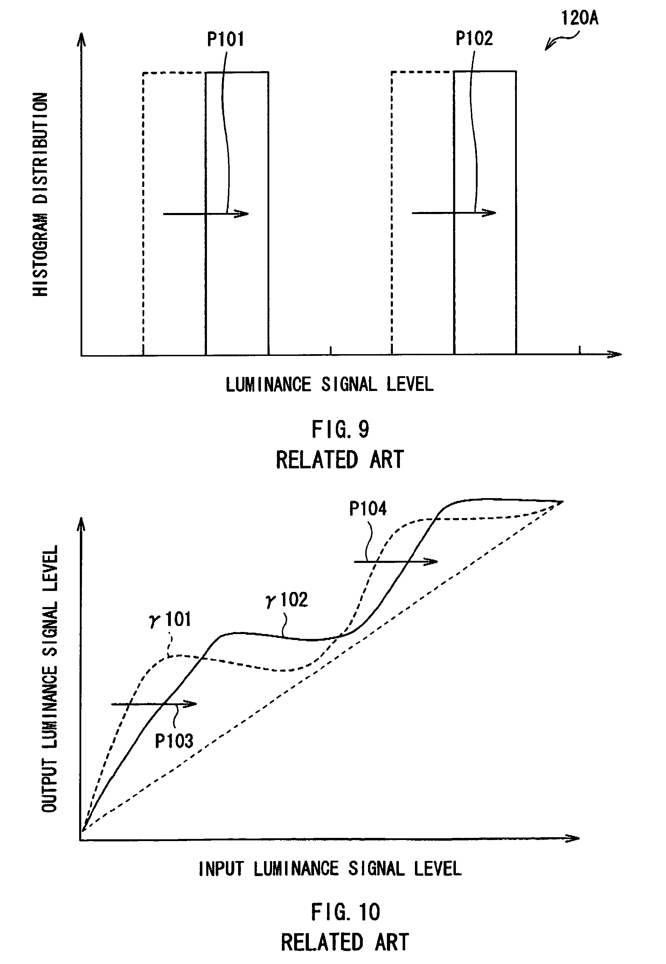

However, in the techniques of Japanese Unexamined Patent Application Publication Nos. 2002-366121, 2004-40808 and 2004-282377, for example, as shown in FIG. 9, in the case where a luminance distribution 120A as a histogram distribution is concentrated on a specific luminance level segment, when the luminance level segment on which the luminance distribution 120A is concentrated is shifted as shown by arrows P101 and P102 in the drawing, even if the luminance level segment is slightly shifted, a large change in the result of image processing such as contrast control may occur. In other words, in the case where the luminance level segment on which the luminance distribution 120A is concentrated is shifted so as to straddle the border between luminance level segments, when image processing is performed on the basis of the histogram distribution, for example, as in the case of the contrast control shown in FIG. 10, a gamma curve $\gamma$ 101 before image processing and a gamma curve $\gamma$ 102 after image processing cause a large change in image quality (refer to arrows P103 and P104 in the drawing). Such a large change in image quality causes something wrong in the quality of a displayed image, thereby an unnatural image is displayed. Such an issue becomes pronounced specifically in the case where the number of luminance level segments is small.
Thus, in the techniques in the related arts, in the case where the luminance distribution as a histogram distribution is concentrated on a specific luminance level segment, there is an issue that image processing causes an unnatural change in image quality.
In view of the foregoing, it is desirable to provide an image processing apparatus, an image display and an image processing method which are capable of preventing an unnatural change in image quality due to image processing.
According to an embodiment of the invention, there is provided an image processing apparatus including: a finding means for finding a luminance histogram in an image frame of input image data; a leveling means for leveling out the luminance histogram found; and an image processing means for performing image processing on the input image data through the use of the luminance histogram leveled out by the leveling means. In addition, "an image frame" means image data constituting one screen.
In this case, the leveling means can level out by limiting the frequency of the luminance histogram to a frequency threshold or less, or by calculating a weighted average value with respect to each of a plurality of successive luminance level segments in the luminance histogram, and then replacing a frequency value at each luminance level segment with the calculated weighted average value.
According to an embodiment of the invention, there is provided a image display including: a fmding means for finding a luminance histogram in an image frame of input image data; a leveling means for leveling out the luminance histogram found; an image processing means for performing image processing on the input image data through the use of the luminance histogram leveled out by the leveling means, thereby generating a processed image data; and a display means for displaying an image on the basis of the processed image data.

According to an embodiment of the invention, there is provided an image processing method including the steps of: finding a luminance histogram in an image frame of input image data; leveling out the luminance histogram found; and performing image processing on the input image data through the use of the luminance histogram leveled out by the leveling means.

In the image processing apparatus, the image display and the image processing method according to the embodiment of the invention, a luminance histogram in an image frame of input image data is found, and the luminance histogram found is leveled out. Then, image processing is performed on the input image data through the use of the luminance histogram leveled out by the leveling means.

In the image processing apparatus, the image display and the image processing method according to the embodiment of the invention, a luminance histogram in an image frame of input image data is found, and the luminance histogram found is leveled out, and then image processing is performed on the input image data through the use of the luminance histogram leveled out by the leveling means, so an unnatural change in image quality due to image processing can be prevented.

Other and further objects, features and advantages of the invention will appear more fully from the following description.

BRIEF DESCRIPTION OF THE DRAWINGS

FIG. 1 is a circuit block diagram of the whole structure of an image display according to a first embodiment of the invention;
FIG. 2 is a plot for describing a luminance distribution;
FIGs. 3A and 3B are plots for describing the function of a distribution limiter shown in FIG. 1;
FIG. 4 is a plot for describing the function of a γ correction circuit shown in FIG. 1;
FIG. 5 is a plot for describing a change in distribution at a specific luminance level segment in a luminance distribution;
FIG. 6 is a circuit block diagram of the structure of a gain producing section according to a second embodiment of the invention;
FIGs. 7A and 7B are plots for describing the function of a distribution filter shown in FIG. 6;
FIG. 8 is a circuit block diagram of the structure of a gain producing section according to a modification of the invention;
FIG. 9 is a plot for describing a change in distribution at a specific luminance level segment in the luminance distribution of an image display in a related art; and
FIG. 10 is a plot for describing a change mode of a gamma curve by a change in distribution at a luminance level segment shown in FIG. 9.

DETAILED DESCRIPTION OF THE PREFERRED EMBODIMENTS

Preferred embodiments will be described in detail below referring to the accompanying drawings.

[First Embodiment]

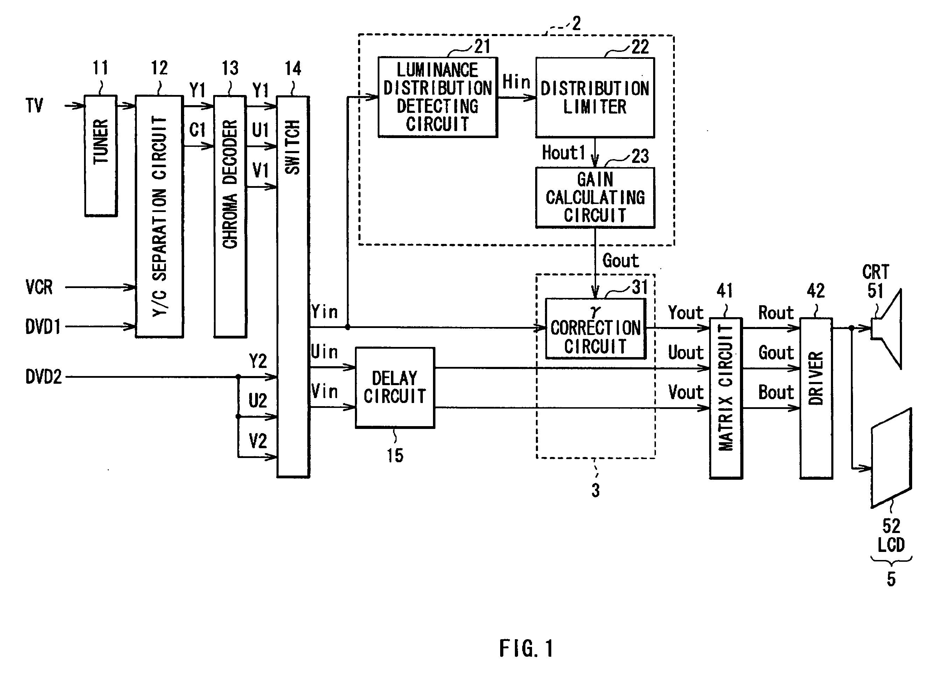

FIG. 1 shows the whole structure of an image display according to a first embodiment of the invention. The image display includes an image processing function section including a tuner 11, a Y/C separation circuit 12, a chroma decoder 13, a switch 14, a delay circuit 15, a gain producing section 2 and an image processing section 3 and an image display function section including a matrix circuit 41, a driver 42 and a display 5. An image processing apparatus and an image processing method according to a first embodiment of the invention are embodied by the image display according to the embodiment, so they will be also described below.

Image signals inputted into the image display may be an output from a VCR (Video Cassette Recorder), a DVD (Digital Versatile Disc) or the like in addition to a TV signal from a TV (television). It has become common practice for recent televisions and personal computers to obtain image information from a plurality of kinds of media and display an image corresponding to each of the media.

The tuner 11 receives and demodulates the TV signal from the TV, and outputs the TV signal as a composite video burst signal (CVBS).

The Y/C separation circuit 12 separates a composite video burst signal from the tuner 11 or a composite video burst signal from a VCR or a DVD1 into a luminance signal Y1 and a chrominance signal C1 to output them.

The chroma decoder 13 outputs the luminance signal Y1 and the chrominance signal C1 separated by the Y/C separation circuit 12 as YUV signals (Y1, U1, V1) including the luminance signal Y1 and color-difference signals U1 and V1.

The YUV signals are image data of a two-dimensional digital image, and a set of pixel values corresponding to a position on an image. A luminance signal Y represents a luminance level, and takes an amplitude value between a white level which is 100% white and a black level which is 100% black. Moreover, a 100% white image signal is 100 (IRE) in a unit called IRE (Institute of Radio Engineers) representing a relative ratio of an image signal. In Japan NTSC (National Television Standards Committee) signal standards, the white level is 100 IRE, and the black level is 0 IRE. On the other hand, the color-difference signals U and V correspond to a signal B-Y produced by subtracting the luminance signal Y from blue (B), and a signal R-Y produced by subtracting the luminance signal Y from red (R), respectively, and when the signals U and V are combined with the luminance signal Y, colors (color phases, chroma saturation, luminance) can be shown.

The switch 14 switches YUV signals from a plurality of kinds of media (in this case, the YUV signals (Y1, U1, V1) and YUV signals (Y2, U2, V2) from a DVD2) so as to output selected signals as YUV signals (Yin, Uin, Vin).

The gain producing section 2 produces gain data Gout to be outputted to the $\gamma$ correction circuit 31 in the image processing section 3 which will be described later, and includes a luminance distribution detecting circuit 21, a distribution limiter 22 and a gain calculating circuit 23.

The luminance distribution detecting circuit 21 detects a luminance distribution as a histogram distribution on the basis of the luminance signal Yin in the YUV signals (Yin, Uin, Vin) outputted from the switch 14.

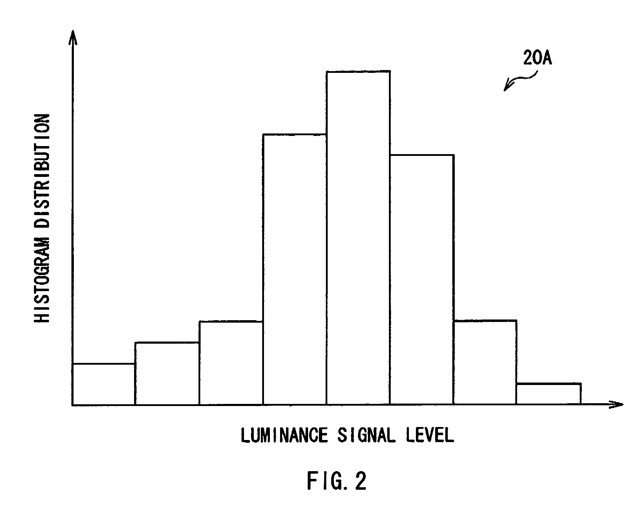

FIG. 2 shows an example of a luminance distribution (a luminance distribution 20A) detected by the luminance distribution detecting circuit 21, and the vertical axis indicates frequency of the histogram distribution, and the horizontal axis indicates luminance level. Moreover, in the example of the luminance distribution 20A, the luminance level has 8 segments (8 gray levels). Luminance distribution data Hin representing the detected luminance distribution is outputted to the distribution limiter 22. Moreover, produced luminance distribution data Hout1 includes, for example, data for 1 frame when displaying an image or data of an image frame (image data constituting one screen) which is data for 1 field.

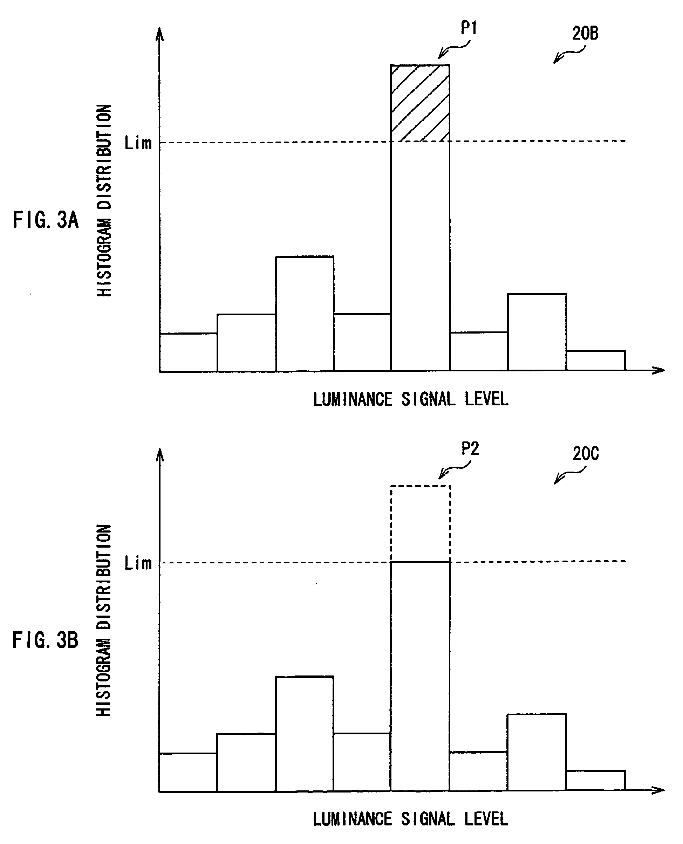

The distribution limiter 22 is a circuit limiting the frequency of a histogram to a predetermined threshold value or less in the luminance distribution data Hin outputted from the luminance distribution detecting circuit 21. More specifically, for example, as shown by P1 in a luminance distribution 20B shown in FIG. 3A, in the case where a distribution is concentrated on a specific luminance level segment, and the frequency is equal to or larger than a frequency threshold Lim, as shown by P2 in a luminance distribution 20C shown in FIG. 3B, a frequency value equal to or larger than the frequency threshold Lim is eliminated. Thereby, the concentration of the distribution on a specific luminance level segment in the histogram is reduced, and the distribution is leveled out. Thus, the luminance distribution data Hout1 leveled out is outputted to the gain calculating circuit 23.

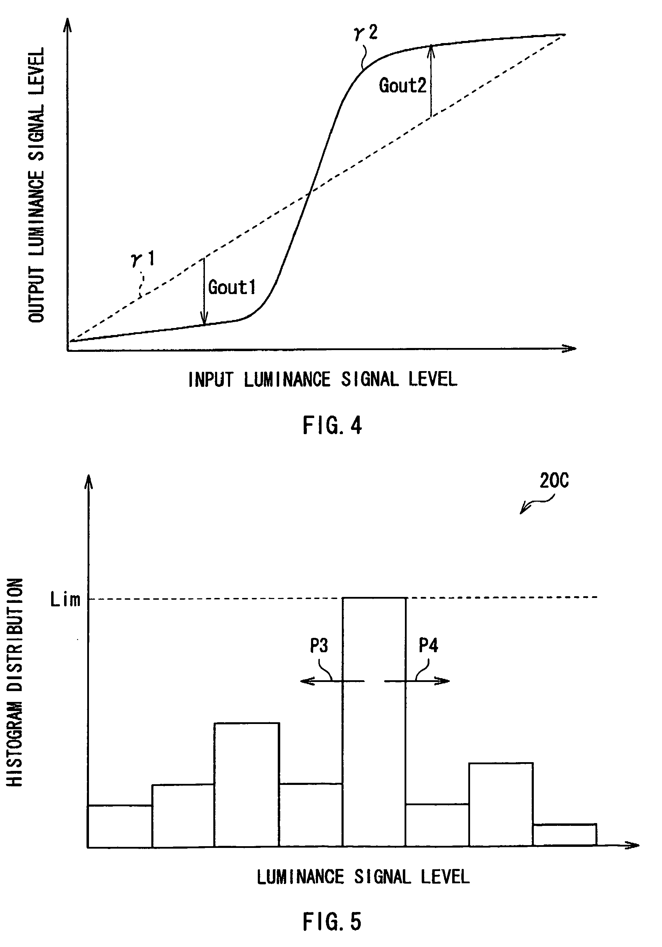

The gain calculating circuit 23 calculates gain data Gout which is used for contrast control in the $\gamma$ correction circuit 31 in the image processing section 3 on the basis of the luminance distribution data Hout1 leveled out by the distribution limiter 22. More specifically, as a method of calculating the gain data Gout, referring to the luminance distribution data Hout1, the correction amount, that is, the gain data Gout at a luminance level with a large frequency value is set so as to be larger than that at a luminance level with a small frequency value. In other words, the variation at an output luminance level relative to a change at an input luminance level is large (refer to FIG. 4). When the gain data Gin is set in such a manner, as will be described later, the whole contrast is more effectively improved. The gain data Gout calculated in such a manner is outputted to the $\gamma$ correction circuit 31 in the image processing section 3.

The delay circuit 15 delays the color-difference signals Uin and Vin outputted from the switch 14, and synchronizes the color-difference signals Uin and Vin and the gain data Gout outputted from the gain producing section 2 to output them to the image processing section 3.

The image processing section 3 performs predetermined image processing on the YUV signals (Yin, Uin, Vin) which are outputted from the switch 14 and pass through the delay circuit 15 through the use of the gain data Gout which is outputted from the gain producing section 2, and in the image display according to the embodiment, the image processing section 3 includes the $\gamma$ correction circuit 31 performing a contrast improvement process on the YUV signals (Yin, Uin, Vin).

As described above, the $\gamma$ correction circuit 31 performs a contrast improvement process on the YUV signals (Yin, Uin, Vin) through the use of the gain data Gout. More specifically, for example, as shown in input luminance level-output luminance level characteristics in FIG. 4, the contrast of an original $\gamma$ curve $\gamma$1 is controlled to a degree shown in the gain data Gout (for example, gain data Gout1, Gout2 in the drawing) on a luminance level basis. When the contrast is controlled in such a manner, for example, the $\gamma$ curve $\gamma$1 can be corrected to be a $\gamma$ curve $\gamma$2, and the contrast can be improved specifically around a luminance level with a large frequency value (as shown in FIG. 3, around the intermediate luminance level) by making a tilt sharp. Therefore, the contrast for the whole YUV signals (Yout, Uout, Vout) after image processing can be more effectively improved. The YUV signals (Yout, Uout, Vout) after image processing (controlling the contrast) are outputted to the matrix circuit 41.

The matrix circuit 41 reproduces RGB signals from the YUV signals (Yout, Uout, Vout) after image processing by the image processing section 3, and outputs the reproduced RGB signals (Rout, Gout, Vout) to the driver 42.

The driver 42 produces a driving signal for the display 5 on the basis of the RGB signals (Rout, Gout, Bout) outputted from the matrix circuit 41, and outputs the driving signal to the display 5.

The display 5 displays an image on the basis of the YUV signals (Yout, Uout, Vout) after image processing by the image processing section 3 according to the driving signal outputted from the driver 42. The display 5 may be any kind of display device, and for example, a CRT (Cathode-Ray Tube) 51, a LCD (Liquid Crystal Display) 52, a PDP (Plasma Display Panel; not shown) or the like is used.

In this case, the YUV signals (Yin, Uin, Vin) correspond to specific examples of "input image data" in the invention, and the YUV signals (Yout, Uout, Vout) correspond to specific examples of "image processed data" in the invention. Moreover, the luminance distribution detecting circuit 21 corresponds to a specific example of "an obtaining means" in the invention, and the distribution limiter 22 corresponds to a specific example of "a leveling means" in the invention, and the γ correction circuit 31 corresponds to a specific example of "an image processing means" in the invention.

Next, referring to FIGs. 1 through 5, the operation of the image display according to the embodiment will be described below.

At first, an image signal to be inputted into the image display is demodulated into the YUV signals. More specifically, a TV signal from the TV is demodulated into a composite video burst signal by the tuner 11, and a composite video burst signal is directly inputted into the image display from the VCR or the DVD1. Then, the composite video burst signal is separated into the luminance signal Y1 and the chrominance signal C1 in the Y/C separation circuit 12, and then the luminance signal Y1 and the chrominance signal C1 are decoded into the YUV signals (Y1, U1, V1) in the chroma decoder 13. On the other hand, YUV signals (Y2, U2, V2) are directly inputted into the image display from the DVD2.

Next, in the switch 14, either the YUV signals (Y1, U1, V1) or the YUV signals (Y2, U2, V2) are selected to be outputted as the YUV signals (Yin, Uin, Vin). Then, the luminance signal Yin in the YUV signals (Yin, Uin, Vin) is outputted into the gain producing section 2 and the γ correction circuit 31 in the image processing section 3, and the color-difference signals Uin and Vin are outputted to the delay circuit 15.

In the gain producing section 2, the following operation of producing the gain data Gout is performed on the basis of the inputted luminance signal Yin.

More specifically, at first, in the luminance distribution detecting circuit 21, for example, a luminance distribution as a histogram distribution as shown in FIG. 2 is detected on the basis of the luminance signal Yin of the YUV signals (Yin, Uin, Vin) outputted from the switch 14, and the luminance distribution is outputted as luminance distribution data Hin. Next, in the distribution limiter 22, in the luminance distribution data Hin, a frequency value is limited to a threshold value or less. More specifically, in the case where the distribution is concentrated on a specific luminance level segment so that the frequency value is equal to or larger than a frequency threshold Lim, a frequency value equal to or larger than the frequency threshold is eliminated, and as a result, the concentration of the distribution on a specific luminance level segment is reduced, and the distribution is leveled out. Then, in the gain calculating circuit 23, on the basis of the luminance distribution data Hout1 leveled out, gain data Gout is calculated to be outputted to the γ correction circuit 31 in the image processing section 3.

On the other hand, in the delay circuit 15, the color-difference signals Uin and Vin are delayed, and as a result, they are synchronized with the gain data Gout outputted from the gain producing section 2.

Next, in the γ correction circuit 31 of the image processing section 3, on the basis of the luminance signal Yin outputted from the switch 14 and the color-difference signals Uin and Vin which are outputted from the switch 14 and pass through the delay circuit 15, the contrast improvement process is performed on the YUV signals (Yin, Yin, Vin) through the use of the gain data Gout supplied from the gain producing section 2. More specifically, the contrast is controlled to the degree shown in the gain data Gout on a luminance level basis.

In this case, as described above, the gain data Gout supplied from the gain producing section 2 is based on the luminance distribution data Hout1 leveled out by the distribution limiter 22. Therefore, for example, as in the case of the luminance distribution 20C shown in FIG. 5, even in the case where the luminance level segment on which the distribution is concentrated is shifted as shown by arrows P3 and P4 in the drawing, a change between the YUV signals (Yin, Uin, Vin) unmodified and the YUV signals (Yout, Vout, Vout) modified is reduced, compared to the case where the gain data based on the luminance distribution data Hin under no modification.

Next, in the matrix circuit 41, the RGB signals (Rout, Gout, Bout) are reproduced from the YUV signals (Yout, Uout, Vout) after contrast processing, and the driver 42 produces the driving signal on the basis of the RGB signals (Rout, Gout, Bout), and an image is displayed on the display 5 on the basis of the driving signal.

As described above, in the embodiment, the luminance distribution detecting circuit 21 in the gain producing section 2 detects a luminance distribution as the histogram distribution of the YUV signals (Yin, Uin, Vin) outputted from the switch 14, and the gain limiter 22 levels out by limiting the frequency value of the luminance distribution to the frequency threshold Lim or less so as to reduce the concentration of the distribution on a specific luminance level segment, and the γ correction circuit 31 in the image processing section 3 performs image processing (contrast control) on the YUV signals (Yin, Uin, Vin) through the use of the luminance distribution data Hout1 leveled out, so even in the case where the distribution is concentrated on a specific luminance level segment, an unnatural change in image quality due to image processing can be prevented.

[Second Embodiment]

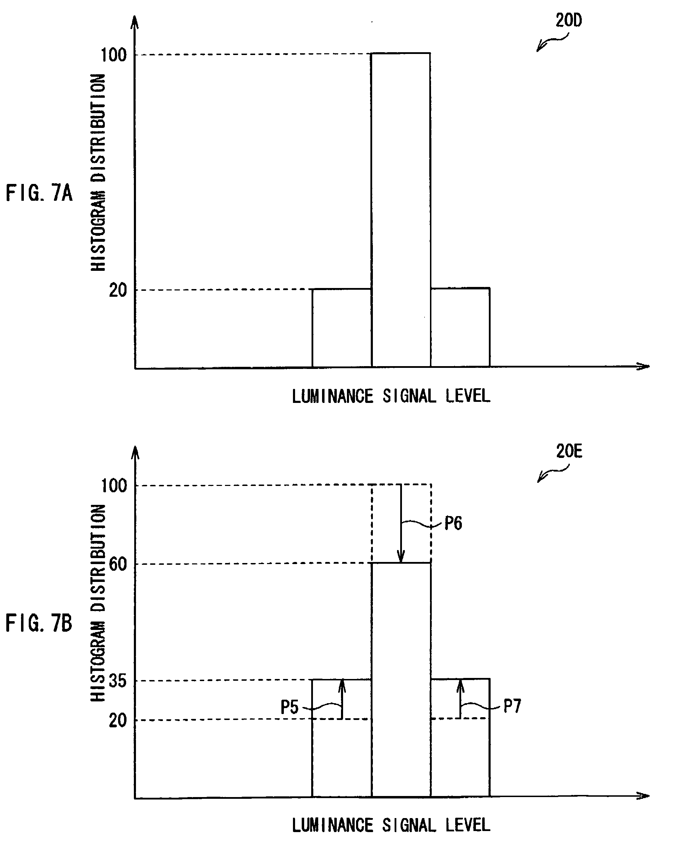

Next, a second embodiment of the invention will be described below. An image display according to the embodiment includes a distribution filter 24 instead of the distribution limiter 22 in the gain producing section 2 in the image display according to the first embodiment.

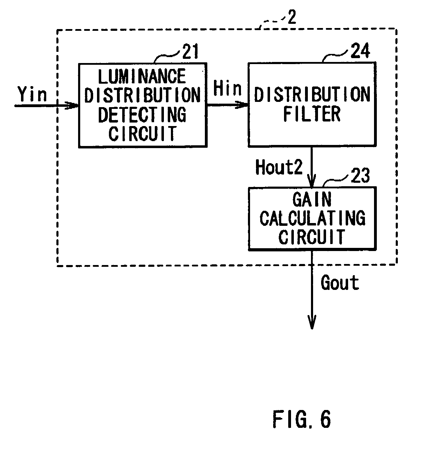

FIG. 6 shows the structure of the gain producing section 2 according to the embodiment. The gain producing section 2 according to the embodiment includes the luminance distribution detecting circuit 21, the distribution filter 24 and the gain calculating circuit 23. Like components are denoted by like numerals as of the first embodiment and will not be further described.
The distribution filter 24 calculates a predetermined weighted average value with respect to each of a plurality of successive luminance level segments in the luminance distribution data Hin outputted from the luminance distribution detecting circuit 21, and replaces an original frequency value with the weighted average value to output the weighted average value as luminance distribution data Hout2.
More specific description will be given below referring to, for example, luminance distributions 20D and 20E shown in FIGs. 7A and 7B, respectively. For example, as shown by the luminance distribution 20D shown in FIG. 7A, in the case where the frequency value at a certain luminance level segment (a luminance level segment on the left) is 20, the frequency value at a luminance level segment at the right of the luminance level segment (a luminance level segment in the middle) is 100, and the frequency value at a luminance level segment at the right of the luminance level segment in the middle (a luminance level segment on the right) is 20, that is, the distribution is concentrated on the luminance level segment in the middle, weighted average values Ave(left), Ave(middle) and Ave(right) at the luminance level segments with respect to each of a plurality of (three in this case) successive luminance level segments are calculated by the following formulas (1) through (3). Further, a weight in this case is (left:middle:right)=(1:2:1) as an example.

$$\text{Ave(left)} = (0 \times 1 + 20 \times 2 + 100 \times 1)/(1+2+1) = 35 \ \ ...(1)$$

$$\text{Ave(middle)} = (20 \times 1 + 100 \times 2 + 20 \times 1)/(1+2+1) = 60 \ \ ...(2)$$

$$\text{Ave(right)} = (100 \times 1 + 20 \times 2 + 0 \times 1)/(1+2+1) = 35 \ \ ...(3)$$

Therefore, when the frequency values at the original luminance level segments are replaced with the weighted average values Ave(left), Ave(middle) and Ave(right) calculated by the formulas (1) through (3), respectively, the luminance distribution 20E shown in FIG. 7B is produced. Compared to the original luminance distribution 20D, in the luminance distribution 20E, as shown by arrows P5 through P7 in the drawing, the frequency value at the luminance level segment on the left increases from 20 to 35, the frequency value at the luminance level segment in the middle decreases from 100 to 60, and the frequency value at the luminance level segment on the right increases from 20 to 35, so it is clear that the concentration of the distribution on the luminance level segment in the middle is reduced, and the distribution is leveled out. The distribution filter 24 corresponds to a specific example of "a leveling means" in the invention.
As described above, in the embodiment, the gain producing section 2 includes the distribution filter 24 instead of the distribution limiter 22 in the first embodiment, and a predetermined weighted average value is calculated in the luminance distribution, and an original frequency value is replaced with the weighted average value to output the weighted average value as the luminance distribution data Hout2, so as in the case of the distribution filter 22, the distribution can be leveled out by reducing the concentration of the distribution on a specific luminance level segment, and the same effects as those in the first embodiment can be obtained. In other words, even in the case where the distribution is concentrated on a specific luminance level segment, an unnatural change in image quality due to image processing can be prevented.

Although the invention is described referring to the first and the second embodiments, the invention is not limited to the embodiments, and can be variously modified.

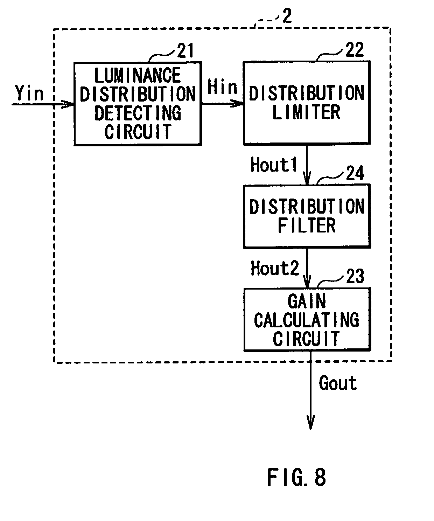

For example, in the embodiments, the case where either the distribution limiter 22 or the distribution filter 24 is included in the gain producing section 2 is described; however, the gain producing section 2 may include the distribution limiter 22 and the distribution filter 24 as shown in FIG. 8. More specifically, the distribution limiter 22 limits the frequency value of the luminance distribution as a histogram distribution to the frequency threshold Lim or less, and the distribution filter 24 calculates a weighted average value in the luminance distribution data after limiting the frequency value, and replaces the original frequency value with the weighted average value to output the weighted average value. In such a structure, an unnatural change in image quality can be further reduced through the use of the distribution limiter 22 and the distribution filter 24. In FIG. 8, an example in which the distribution filter 24 is arranged on the output side of the distribution limiter 22 is shown; however, they may be arranged in reverse order. In other words, the distribution filter 24 may be arranged between the luminance distribution detecting circuit 21 and the distribution limiter 22.

For example, in the above embodiments, the case where the luminance level in the luminance distributions 20A through 20E is divided into 8 segments (8 gray levels) is described; however, the distribution limiter 22 or the distribution filter 24 may level out according to the number of luminance level segments. More specifically, an unnatural change in image quality due to the concentration of the distribution on a specific luminance level segment is specifically pronounced in the case where the number of luminance level segments is small as described above, so only in the case where the number of luminance level segments is equal to or less than a threshold number, the leveling process is performed. In such a structure, in the case of the number of luminance level segments in which an unnatural change in image quality is negligible, the leveling process by the distribution limiter 22 or the distribution filter 23 can be suspended so as to improve the processing speed of the whole image processing.

Moreover, in the above embodiments, the case where the image processing section 3 includes the $\gamma$ correction circuit 31 is described; however, the structure of the image processing section 3 is not limited to the case, and the image processing section 3 may include, for example, another circuit for image processing, or may include a plurality of such circuits.

It should be understood by those skilled in the art that various modifications, combinations, sub-combinations and alterations may occur depending on design requirements and other factors insofar as they are within the scope of the appended claims or the equivalents thereof.

**Claims**

1. An image processing apparatus, comprising:

   a finding means for finding a luminance histogram in an image frame of input image data;
   a leveling means for leveling out the luminance histogram found; and
   an image processing means for performing image processing on the input image data through the use of the luminance histogram leveled out by the leveling means.

2. The image processing apparatus according to claim 1, wherein
   the leveling means includes a distribution limiter, the distribution limiter limiting the frequency of the luminance histogram to a frequency threshold or less.

3. The image processing apparatus according to claim 1, wherein
   the leveling means includes a distribution filter, the distribution filter calculating a weighted average value with respect to each of a plurality of successive luminance level segments in the luminance histogram, and then replacing a frequency value at each luminance level segment with the calculated weighted average value.

4. The image processing apparatus according to claim 2, wherein
   the leveling means further includes a distribution filter, the distribution filter calculating a weighted average value with respect to each of a plurality of successive luminance level segments in the luminance histogram limited by the distribution limiter, and then replacing a frequency value at each luminance level segment with the calculated weighted average value.

5. The image processing apparatus according to claim 1, wherein
   the leveling means levels out provided that the number of intensify level segments in the luminance histogram is equal to or less than a threshold number.

6.  The image processing apparatus according to claim 1, wherein
    the image processing means includes a γ correction circuit for improving the contrast of the input image data.

7.  An image display, comprising:

    a finding means for finding a luminance histogram in an image frame of input image data;
    a leveling means for leveling out the luminance histogram found;
    an image processing means for performing image processing on the input image data through the use of the luminance histogram leveled out by the leveling means, thereby generating a processed image data; and
    a display means for displaying an image on the basis of the processed image data.

8.  An image processing method, comprising the steps of:

    finding a luminance histogram in an image frame of input image data;
    leveling out the luminance histogram found; and
    performing image processing on the input image data through the use of the luminance histogram leveled out by the leveling means.

9.  An image processing apparatus, comprising:

    a finding section finding a luminance histogram in an image frame of input image data;
    a leveling section leveling out the luminance histogram found; and
    an image processing section performing image processing on the input image data through the use of the luminance histogram leveled out by the leveling means.

10. An image display, comprising:

    a finding section finding a luminance histogram in an image frame of input image data;
    a leveling section leveling out the luminance histogram found;
    an image processing section performing image processing on the input image data through the use of the luminance histogram leveled out by the leveling means, thereby generating a processed image data; and
    a display section displaying an image on the basis of the processed image data.

FIG. 1

FIG. 2

FIG. 3A

HISTOGRAM DISTRIBUTION

P1

20B

Lim

LUMINANCE SIGNAL LEVEL

FIG. 3B

HISTOGRAM DISTRIBUTION

P2

20C

Lim

LUMINANCE SIGNAL LEVEL

OUTPUT LUMINANCE SIGNAL LEVEL

γ2

Gout2

γ1

Gout1

INPUT LUMINANCE SIGNAL LEVEL

FIG. 4

20C

HISTOGRAM DISTRIBUTION

Lim

P3    P4

LUMINANCE SIGNAL LEVEL

FIG. 5

_2_

_21_

Yin → LUMINANCE DISTRIBUTION DETECTING CIRCUIT

Hin → _24_ DISTRIBUTION FILTER

Hout2 ↓ _23_

GAIN CALCULATING CIRCUIT

Gout ↓

FIG. 6

FIG. 7A

FIG. 7B

EP 1 758 370 A2

```
                                    ┌─ 2
    ┌─────────────────────────────────────────────┐
    │        ┌─21                  ┌─22            │
    │     ┌──────────┐          ┌──────────┐       │
    │     │LUMINANCE │          │          │       │
Yin │     │DISTRIBUTION│ Hin    │DISTRIBUTION│     │
───────→  │DETECTING │ ──────→  │ LIMITER  │       │
    │     │ CIRCUIT  │          │          │       │
    │     └──────────┘          └──────────┘       │
    │                                │ Hout1       │
    │                                │      ┌─24   │
    │                             ┌──────────┐     │
    │                             │DISTRIBUTION│   │
    │                             │ FILTER   │     │
    │                             └──────────┘     │
    │                                │ Hout2 ┌─23  │
    │                             ┌──────────┐     │
    │                             │  GAIN    │     │
    │                             │CALCULATING│    │
    │                             │ CIRCUIT  │     │
    │                             └──────────┘     │
    └─────────────────────────────────│───────────┘
                                       │ Gout
                                       ↓
```

FIG. 8

15

120A

P101

P102

HISTOGRAM DISTRIBUTION

LUMINANCE SIGNAL LEVEL

FIG. 9
RELATED ART

P104

OUTPUT LUMINANCE SIGNAL LEVEL

$\gamma$101

$\gamma$102

P103

INPUT LUMINANCE SIGNAL LEVEL

FIG. 10
RELATED ART

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005241772 A
- JP 2002366121 A
- JP 2004040808 A
- JP 2004282377 A